# EUROPÄISCHE PATENTSCHRIFT

(11) **EP 4 533 129 B1**
(45) Veröffentlichungstag und Bekanntmachung des Hinweises auf die Patenterteilung: **09.12.2026**
(21) Anmeldenummer: 23721897.9
(22) Anmeldetag: 24.04.2023
(51) Int. Cl.: G01S 7/539, G01S 7/52, G01S 15/931, G06N 3/08, G06N 20/00

(54) **VERFAHREN UND VORRICHTUNG ZUM BEREITSTELLEN VON TRAININGSDATENSÄTZEN FÜR EIN KLASSIFIKATIONSMODELL ZUR OBJEKTIDENTIFIKATION FÜR EIN ULTRASCHALL-SENSORSYSTEM IN EINER MOBILEN EINRICHTUNG**
METHOD AND APPARATUS FOR PROVIDING TRAINING DATA SETS FOR A CLASSIFICATION MODEL FOR OBJECT IDENTIFICATION FOR AN ULTRASONIC SENSOR SYSTEM IN A MOBILE DEVICE
PROCÉDÉ ET APPAREIL POUR FOURNIR DES ENSEMBLES DE DONNÉES D'ENTRAÎNEMENT POUR UN MODÈLE DE CLASSIFICATION POUR UNE IDENTIFICATION D'OBJET POUR UN SYSTÈME DE CAPTEURS ULTRASONORES DANS UN DISPOSITIF MOBILE

(30) Priorität: 01.06.2022 DE 102022205574
(43) Veröffentlichungstag der Anmeldung: 09.04.2025
(73) Patentinhaber: Robert Bosch GmbH, 70442 Stuttgart (DE)
(72) Erfinder: REIMANN, Tom, 73266 Bissingen An Der Teck (DE); GEILER, Thomas, 71134 Aidlingen (DE); TCHORZEWSKI, Michael, 71034 Boeblingen (DE); WINGERT, Tobias, 71229 Leonberg (DE)
(86) Internationale Anmeldenummer: PCT/EP2023/060645
(87) Internationale Veröffentlichungsnummer: WO 2023/232351

(56) Entgegenhaltungen:
- DE-A1- 102020 110 358

## Beschreibung

### Technisches Gebiet

Die Erfindung betrifft Ultraschall-Sensorsysteme für mobile Einrichtungen, wie z. B. Kraftfahrzeuge, und insbesondere Verfahren zum Bereitstellen von Trainingsdatensätzen zum Trainieren eines Klassifikationsmodells für die Objektklassifizierung basierend auf Eingangsdatensätzen, die Ultraschallsensordaten entsprechen und/oder aus diesen abgeleitet werden.

### Technischer Hintergrund

Fahrzeuge werden in der Regel mit Ultraschall-Sensorsystemen zur Objektdetektion ausgestattet. Diese weisen häufig mehrere Ultraschallwandler für verschiedene Erfassungsbereiche auf, in denen Umgebungsobjekte detektiert werden sollen. Ein derartiges Ultraschall-Sensorsystem ist häufig an dem vorderen und/oder dem hinteren Stoßfänger eines Fahrzeugs angeordnet.

Neben der Lokalisierung von Umgebungsobjekten durch Auswertung der Sensordaten der Ultraschallwandler können die Sensordaten auch zur Klassifikation der Umgebungsobjekte verwendet werden. Insbesondere soll eine Klassifikation ermöglichen, die Höhe von Umgebungsobjekten zu unterscheiden, insbesondere dahingehend, ob die Umgebungsobjekte von der mobilen Einrichtung überfahrbar oder nicht überfahrbar, d. h. kollisionsrelevant, sind.

Die Klassifikation von Umgebungsobjekten erfolgt in der Regel mithilfe von Klassifikationsmodellen. Diese können datenbasiert ausgebildet sein, d. h. das Klassifikationsmodell kann mithilfe eines Machine-Learning-Verfahrens mithilfe von Trainingsdatensätzen trainiert werden.

Zwischen unterschiedlichen Fahrzeugtypen können sich die Ultraschall-Sensorsysteme hinsichtlich ihrer Konfiguration, d. h. hinsichtlich der Anzahl, der Anordnung und der Typen der verwendeten Ultraschallwandler, unterscheiden, so dass Trainingsdatensätze für das Klassifikationsmodell eines Ultraschall-Sensorsystems nicht ohne weiteres für das Training eines Klassifikationsmodells in einem Ultraschallsensorsystem mit davon abweichender Konfiguration eingesetzt werden können. Jedoch ist das Erfassen von Trainingsdatensätzen für neue Konfigurationen für Ultraschallsensorsysteme aufwendig und stellt einen erheblichen zeitlichen Aufwand vor der Inbetriebnahme des Ultraschallsensorsystems dar.

Die Druckschrift DE 10 2020 110358 A1 offenbart ein Verfahren zum Ausbilden eines neuronalen Transformationsnetzwerks zur Datentransformation eines Trainingsdatensatzes von Ultraschallsensordaten zur Anpassung an eine Ultraschallsensor-Installationsposition an einem Fahrzeug, aufweisend folgende Verfahrensschritte: Zurverfügungstellen eines Messwertdatensatzes aus einer Vielzahl von Ultraschallsensor-Messkurven an einer Ultraschallsensor-Installationsposition an einem Fahrzeug; Erzeugen eines Superdatensatzes von Ultraschallsensordaten basierend auf dem Messwertdatensatz und der dem Messwertdatensatz zugeordneten Ultraschallsensor-Installationsposition am Fahrzeug; und Trainieren zumindest eines Transformationsnetzwerkes basierend auf dem Superdatensatz und zumindest einem weiteren Messwertdatensatz mit einer weiteren Vielzahl von Ultraschallsensor-Messkurven an einer weiteren Ultraschallsensor-Installationsposition am Fahrzeug.

### Offenbarung der Erfindung

Erfindungsgemäß sind ein computerimplementiertes Verfahren zum Trainieren eines datenbasierten Klassifikationsmodells für eine Konfiguration eines neuen Ultraschall-Sensorsystems mit mehreren Ultraschallwandlern gemäß Anspruch 1, eine Vorrichtung gemäß Anspruch 8 zur Durchführung des Verfahrens, ein entsprechendes Computerprogrammprodukt gemäß Anspruch 9 und ein entsprechendes maschinenlesbares Speichermedium gemäß Anspruch 10 vorgesehen.

Weitere Ausgestaltungen sind in den abhängigen Ansprüchen angegeben.

Gemäß einem ersten Aspekt ist ein computerimplementiertes Verfahren zum Trainieren eines datenbasierten Klassifikationsmodells für eine Konfiguration eines neuen Ultraschall-Sensorsystems mit mehreren Ultraschallwandlern mit Trainingsdatensätzen, vorgesehen, wobei das Klassifikationsmodell für ein oder mehrere Umgebungsobjekte mindestens eine Klasse für eine Objekteigenschaft angibt, wobei ein Trainingsdatensatz einen Eingangsdatensatz aus Sensordaten der Ultraschallwandler und/oder aus daraus abgeleiteten Sensordatenmerkmalen einem Klassifikationsvektor für ein oder mehrere Umgebungsobjekte zuordnet, mit folgenden Schritten:
- Bereitstellen von Trainingsdatenmengen für mehrere Konfigurationen von Ultraschall-Sensorsystemen, wobei die Trainingsdatenmengen jeweils einen oder mehrere Trainingsdatensätze für jeweils eine entsprechende Vermessungssituation umfassen,
- Auswählen von Konfigurationen von Ultraschall-Sensorsystemen, die zumindest bezüglich Konfigurationsmerkmalen nächstliegend zu der Konfiguration des neuen Ultraschall-Sensorsystems sind,
- Auswählen von Trainingsdatensätzen und Validierungsdatensätzen aus den den ausgewählten Konfigurationen von Ultraschall-Sensorsystemen zugeordneten Trainingsdatenmengen;
- Trainieren des Klassifikationsmodells für die Konfiguration des neuen Ultraschall-Sensorsystems basierend auf den ausgewählten Trainingsdatensätzen und Validierungsdatensätzen.

Bei der Nutzung von datenbasierten Klassifikationsmodellen für die Objektidentifikation mit Ultraschallsensorsystemen besteht eine Schwierigkeit darin, Trainingsdatensätze in ausreichender Menge zu erhalten. Die Trainingsdatensätze werden in der Regel durch Aufzeichnung von Sensorsignalen für verschiedene Umgebungssituationen ermittelt. Dazu müssen die Umgebungssituationen erstellt werden und eine Vermessung mithilfe des Ultraschall-Sensorsystems durchgeführt werden, für das ein Klassifikationsmodell erstellt werden soll. Das datenbasierte Klassifikationsmodell kann ein neuronales Netz, ein probabilistisches Regressionsmodell, einen Entscheidungsbaum, der über einen gradient boosting Algorithmus trainiert wird, oder dergleichen umfassen.

Jede der für das Erstellen eines Trainingsdatensatzes vorgesehenen Vermessungssituationen kann beispielsweise durch ein oder mehrere Umgebungsobjekte mit jeweils gleichen oder unterschiedlichen Objekteigenschaften, wie z. B. Höhen, Breiten und dergleichen, und mit jeweils gleichen oder unterschiedlichen Abständen und/oder Ausrichtungen bezüglich des Ultraschall-Sensorsystems bestimmt sein.

Die aus verschiedenen Vermessungssituationen jeweils ermittelten Trainingsdatensätze sehen jeweils einen Eingangsdatensatz vor, der die Sensordaten umfasst und/oder aus den Sensordaten aggregierte Merkmale umfasst, wie z. B. eine maximale Signalamplitude, ein Histogramm über Anzahl der Mehrfachläufer bezüglich den Detektionen des erfassten Umgebungsobjekts, einen Anteil an Punkt/Linien/Einzelecho-Detektionen des Umgebungsobjektes, einen Anteil an Detektionen mit bestimmten Signalmustern, z.B. Signalmuster, die auf Fußgänger hindeuten, bezüglich der Amplitude, Mehrfachreflektionen und dergleichen, eine durchschnittliche Anzahl der Ultraschallwandler, die ein bestimmtes Umgebungsobjekt erfassen
Das zu klassifizierende Umgebungsobjekt wird entsprechend klassifiziert, und es wird ein Klassifikationsvektor als Label bereitgestellt, das für das eine oder die mehreren Umgebungsobjekte jeweils mehrere Objektklassen umfasst, die jeweils das Vorliegen (bzw. eine Modellzuverlässigkeit des Vorliegens) einer bestimmten vordefinierten Objekteigenschaft angeben. Der Klassifikationsvektor bildet das Label für den entsprechenden der Vermessungssituation zugeordneten Trainingsdatensatz.

Für eine bestimmte Vermessungssituation hängen die Eingangsdatensätze der Trainingsdatensätze erheblich von der Konfiguration des betrachteten Ultraschall-Sensorsystems ab. Die Konfiguration des Ultraschall-Sensorsystems ergibt sich aus Konfigurationsmerkmalen, die die Anzahl, die Anordnung und die Typen der verwendeten Ultraschallwandler und dergleichen angeben. Insbesondere die Anordnung kann durch die Merkmale der Sensoreinbauhöhe, des vertikalen Einbauwinkels der Ultraschallwandler, des Versatzes der jeweiligen Einbauhöhen der Ultraschallwandler und der horizontalen Einbauwinkel der Ultraschallwandler bestimmt sein.

Das obige Verfahren sieht nun vor, für eine neue Konfiguration eines Ultraschall-Sensorsystems Trainingsdatensätze zum Trainieren des entsprechenden Klassifikationsmodells bereitzustellen, indem bereits für andere Konfigurationen von Ultraschall-Sensorsystemen erfasste Trainingsdatensätze genutzt werden, obwohl diese für eine abweichende Konfiguration von Ultraschall-Sensorsystemen ermittelt worden sind.

Das Verfahren geht von für mehrere verschiedene Konfigurationen von Ultraschall-Sensorsystemen erfassten Trainingsdatenmengen aus. Jede Trainingsdatenmenge ist einer Konfiguration zugeordnet und umfasst Trainingsdatensätze für verschiedene Vermessungssituationen mit der betreffenden Konfiguration des Ultraschall-Sensorsystems.

Es kann vorgesehen sein, dass Konfigurationsmerkmale durch ein oder mehrere Anordnungsmerkmale und ein oder mehrere Sensortypmerkmale bestimmt sind, wobei die Konfigurationen von Ultraschall-Sensorsystemen ausgewählt werden, indem eine Anzahl von nächstbenachbarten Konfigurationsmerkmalspunkten ausgewählt wird, die einen Bereich aufspannen, der einen Konfigurationsmerkmalspunkt der Konfiguration des neuen Ultraschall-Sensorsystems beinhaltet.

Bezüglich einer neuen Konfiguration eines Ultraschall-Sensorsystems werden zunächst nächstliegende bereits mit Trainingsdatenmengen versehene Konfigurationen von Ultraschall-Sensorsystemen ausgewählt, d. h. es werden die ähnlichsten Konfigurationen der Ultraschall-Sensorsysteme ausgewählt. Die Auswahl erfolgt basierend auf den Konfigurationsmerkmalen, die die durch Anordnungsmerkmale charakterisierte Anordnung und die Anzahl der Ultraschallwandler in dem betreffenden Ultraschallsensorsystem sowie den durch die Sensortypmerkmale bestimmte Sensortyp angeben können.

Die Anordnungsmerkmale können beispielsweise eine Einbauhöhe der Ultraschallwandler über dem Untergrund, einen vertikalen Einbauwinkel der Ultraschallwandler, einen Versatz der Einbauhöhen zwischen den Ultraschallwandlern und einen horizontalen Einbauwinkel der Ultraschallwandler umfassen.

Insbesondere werden als Konfigurationen für Ultraschall-Sensorsysteme diejenigen hinsichtlich der Konfigurationsmerkmale nächstbenachbarten Konfigurationen von Ultraschallsensorsystemen ausgewählt, die einen kleinstmöglichen Bereich aufspannen, in dem die neue Konfiguration des Ultraschall-Sensorsystems liegt. Insbesondere beträgt die Mindestanzahl der ausgewählten nächstbenachbarten Konfigurationen für Ultraschall-Sensorsysteme einer um 1 erhöhten Anzahl der betrachteten Konfigurationsmerkmale.

Bezüglich der Konfigurationsmerkmale können die nächstliegenden Konfigurationen als Winkelunterschied der durch die Konfigurationsmerkmale bestimmten Vektoren im Merkmalsraum ermittelt werden.

Alternativ können die nächstliegenden Konfigurationen als euklidischer Abstand zwischen den durch die Konfigurationsmerkmale bestimmten Punkten im Merkmalsraum oder als euklidischer Abstand bezüglich normierter Konfigurationsmerkmale ermittelt werden. Weiterhin können die Konfigurationsmerkmale auch gewichtet werden, um bei der Abstandsbestimmung bestimmte Konfigurationsmerkmale zu priorisieren.

Für jede der ausgewählten Konfigurationen stehen Trainingsmengen von Trainingsdatensätzen zur Verfügung, die jeweils Trainingsdatensätze für verschiedene Vermessungssituationen umfassen.

Aus allen Trainingsdatenmengen der ausgewählten Konfigurationen werden für eine bestimmte Vermessungssituation bzw. für ähnliche Vermessungssituationen Trainingsdatensätze und Validierungsdatensätze ausgewählt. Ähnliche Vermessungssituationen können beispielsweise basierend auf Objektmerkmalen, wie dem Abstand von der Ultraschallsensoreinrichtung und der Höhe des Umgebungsobjekts, charakterisiert werden, wobei sich Ähnlichkeiten zwischen betrachteten Konfigurationen durch Unterschreiten eines vorgegebenen Maximalabstands (euklidischer Abstand) bezüglich der Objektmerkmale beschreiben lassen. Man erhält so für unterschiedliche Vermessungssituationen jeweils eine Reihe von Trainingsdatensätzen und Validierungsdatensätzen, mit denen ein neues Klassifikationsmodell für die neue Konfiguration des Ultraschall-Sensorsystems trainiert werden kann.

Weiterhin kann das Klassifikationsmodell mit weiteren Trainingsdatensätzen für die Konfiguration des neuen Ultraschall-Sensorsystems nachtrainiert werden.

Es kann vorgesehen sein, dass ein weiterer Trainingsdatensatz für eine bestimmte Vermessungssituation durch eine Vermessung bestimmt wird, wenn eine Modellgenauigkeit, die mithilfe der Validierungsdatensätze, die der bestimmten Vermessungssituation oder Vermessungssituationen, die zu der bestimmten Vermessungssituation ähnlich sind, zugeordnet sind, bestimmt werden, unter einem vorgegebenen Schwellenwert liegt.

Ergibt sich für eine Vermessungssituation bei einer Auswertung mit den der entsprechenden Vermessungssituation zugeordneten Validierungsdatensätzen eine zu niedrige Modellgenauigkeit, beispielsweise bei einer Quote von richtigen Klassifizierungen von unter einem vorgegebenen Schwellenanteil von z. B. 95 %, so kann vorgesehen sein, hierzu zusätzliche Trainingsdatensätze für die entsprechende Vermessungssituation für die neue Konfiguration des Ultraschall-Sensorsystems in herkömmlicher Weise zu ermitteln. Da jedoch zu erwarten ist, dass für zumindest einen Teil der Vermessungssituationen die Modellgenauigkeit ausreicht, kann auf das Ermitteln der Trainingsdaten für die Vermessungssituation verzichtet und der gesamte Aufwand zum Ermitteln von Trainingsdatensätzen erheblich reduziert werden.

Insbesondere kann die Vermessungssituation durch Vermessungsmerkmale bestimmt sein, wobei ähnliche Vermessungssituationen dadurch bestimmt sind, dass Vermessungsmerkmalspunkte, die jeweils durch ein oder mehrere Vermessungsmerkmale einer Vermessungssituation bestimmt sind, von dem Vermessungsmerkmalspunkt der bestimmten Vermessungssituation einen Abstand von nicht mehr als einen vorgegebenen Maximalabstand aufweisen, wobei insbesondere ein Vermessungsmerkmal einer relativen Position und eine oder mehrere Objekteigenschaften der die Vermessungssituation charakterisierenden Umgebungsobjekte bestimmt sind.

Gemäß einer Ausführungsform können die Konfigurationen von Ultraschall-Sensorsystemen für verschiedene Vermessungssituationen ausgewählt werden, indem eine Anzahl von nächstbenachbarten Konfigurationsmerkmalspunkten, die neben dem einen oder den mehreren Anordnungsmerkmalen und dem einen oder den mehreren Sensortypmerkmalen auch durch ein oder mehrere Vermessungsmerkmale, insbesondere eine relative Position eines oder mehrerer Umgebungsobjekte zu dem neuen Ultraschall-Sensorsystem, und/oder eine Objekteigenschaft, insbesondere eine Höhe, bestimmt sind, ausgewählt wird, so dass diese einen Bereich aufspannen, der den Konfigurationsmerkmalspunkt der Konfiguration des neuen Ultraschall-Sensorsystems einschließlich des einen oder der mehreren Vermessungsmerkmale beinhaltet.

In dieser Ausführungsform kann für jede Vermessungssituation eine individuelle Anzahl von nächstliegenden Konfigurationen von Ultraschallsensorsystemen ausgewählt werden, wobei eine Auswahl der nächstbenachbarten Konfigurationen neben den Konfigurationsmerkmalen auch mindestens ein Vermessungsmerkmal, wie beispielsweise eine Höhe des Umgebungsobjekts und einen Abstand zum Ultraschall-Sensorsystem, berücksichtigt. Auf diese Weise können sich für jede Vermessungssituation unterschiedliche nächstliegende Konfigurationen von Ultraschallsensorsystemen ergeben, aus denen die zugeordneten Trainingsdatensätze und Validierungsdatensätze für die betreffende Vermessungssituation ausgewählt werden.

### Kurzbeschreibung der Zeichnungen

Ausführungsformen werden nachfolgend anhand der beigefügten Zeichnungen näher erläutert. Es zeigen:
- Figur 1: eine schematische Darstellung eines Fahrzeugs mit einem Ultraschallsensorsystem mit einer Konfiguration von Ultraschallwandlern;
- Figur 2: ein Flussdiagramm zur Veranschaulichung eines Verfahrens zum Ermitteln von Trainingsdatensätzen für das Training des Klassifikationsmodells zur Objektidentifikation in dem Ultraschallsensorsystem; und
- Figur 3: ein Diagramm zur Veranschaulichung von unterschiedlichen Konstruktionen von Ultraschallsensorsystemen hinsichtlich zweier beispielhafter Konstruktionsmerkmale als Grundlage zur Auswahl von Trainingsdatensätzen für eine neue Konstruktion eines Ultraschallsensorsystems.

### Beschreibung von Ausführungsformen

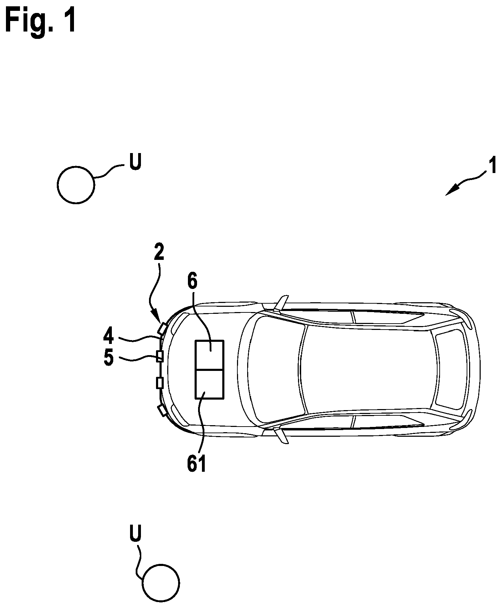

Figur 1 zeigt eine schematische Darstellung eines Fahrzeugs 1 in einer Fahrzeugumgebung, in der sich ein oder mehrere Umgebungsobjekte U befinden können. Das Fahrzeug 1 als Beispiel für eine mobile Einrichtung umfasst ein Ultraschall-Sensorsystem 2, das an einem Stoßfänger 4 angeordnet ist. Das Ultraschall-Sensorsystem 2 umfasst mehrere Ultraschallwandler 5 zum Aussenden eines Ultraschallsignals mit Signalimpulsen und zum Empfangen von an den Umgebungsobjekten U reflektierten Ultraschallsignalen. Die Anordnung der Ultraschallwandler 5 und der Typ der Ultraschallwandler 5 bestimmen eine Konfiguration des Ultraschall-Sensorsystems 2. Verschiedene Typen von Fahrzeugen 1 weisen unterschiedliche Ultraschall-Sensorsysteme 2 mit unterschiedlichen Konfigurationen auf.

Es ist eine Steuereinheit 6 vorgesehen, die zur Auswertung der Sensorsignale der Ultraschallwandler 5 des Ultraschallsensorsystems 2 dient. In der Steuereinheit 6 ist neben einem Lokalisierungsmodell zur Lokalisierung der Umgebungsobjekte relativ zum Fahrzeug 1 ein datenbasiertes Klassifikationsmodell 61 implementiert. Das datenbasierte Klassifikationsmodell kann ein neuronales Netz, ein probabilistisches Regressionsmodell, einen datenbasierten Entscheidungsbaum, der über einen gradient boosting Algorithmus trainiert wird, oder dergleichen umfassen. Die Sensorsignale der Ultraschallwandler 5 werden dazu in an sich bekannter Weise mithilfe von ultraschallbasierten Lokalisationsverfahren ausgewertet, um in der Steuereinheit 6 eine virtuelle Karte der Umgebung zu erstellen und dort die Positionen von detektierten Umgebungsobjekten U einzutragen.

Das Klassifikationsmodell 61 ist auf die Konfiguration des Ultraschall-Sensorsystems 2 trainiert. Dieses soll trainiert werden/sein, um eine Klassifizierung von Umgebungsobjekten U hinsichtlich einer Objekteigenschaft, insbesondere ihrer Höhe, vorzunehmen vor allem zur Unterscheidung, ob das betreffende Umgebungsobjekt von dem Fahrzeug 1 überfahrbar ist oder nicht, d. h. kollisionsrelevant, ist. Dazu ist das Klassifikationsmodell 61 trainiert, um für jedes Umgebungsobjekt U ein Klassifikationsergebnis zu ermitteln, das jedem in der Umgebung identifizierten Umgebungsobjekt U eine Objekteigenschaft zuweist.

Den detektierten Umgebungsobjekten werden mithilfe des Klassifikationsmodells 61 Klassifikationsergebnisse zugeordnet. Die Klassifikationsergebnisse klassifizieren die Umgebungsobjekte U nach den entsprechenden relevanten Objekteigenschaften, insbesondere nach Höhenklassen.

Das datenbasierte Klassifikationsmodell 61 ordnet einem Eingangsdatensatz, der eine Signalzeitreihe der Sensorsignale der Ultraschallwandler und/oder daraus abgeleitete bzw. aggregierte Signalmerkmale umfassen kann, einen Klassifikationsvektor zu. Der Klassifikationsvektor umfasst Elemente, die für jedes identifizierte Umgebungsobjekt eine mögliche Klasse des Klassifikationsergebnisses quantifizieren. Der Wert des Elements gibt dabei eine Wahrscheinlichkeit an, dass die der Klasse zugeordnete Objekteigenschaft durch das die Klasse betreffende Umgebungsobjekt U realisiert ist. Durch eine argmax-Funktion der jeweils einem Umgebungsobjekt zugeordneten Elemente des Klassifikationsvektors kann für die Modellauswertung die bestimmte Klasse als Klassifikationsergebnis ausgegeben werden. Der Wert des Elements, das durch argmax bestimmt wird, entspricht dabei der Klassifikationskonfidenz.

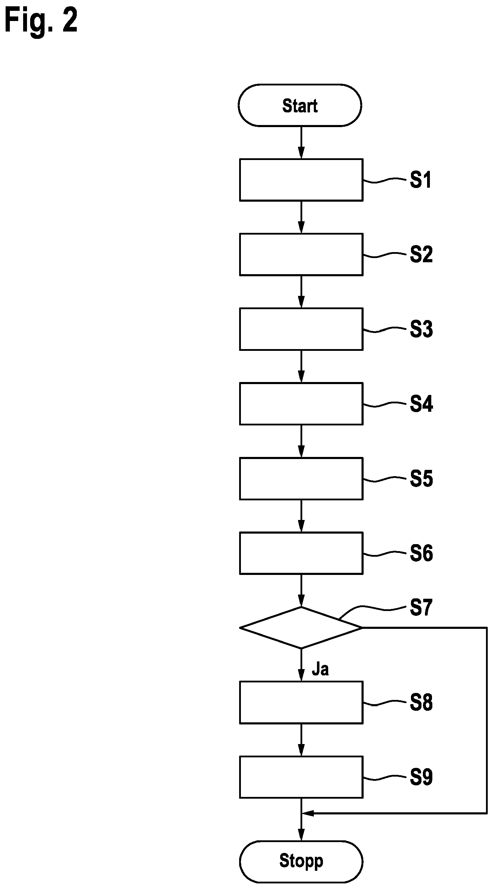

Bei einem Erstellen eines datenbasierten Klassifikationsmodells 61 für eine neue Konfiguration eines Ultraschallsensorsystems müssen bislang in aller Regel Trainingsdatensätze durch Vermessung von Vermessungssituationen in aufwendiger Weise ermittelt werden. Dazu werden Vermessungssituationen nachgestellt und entsprechende Signalzeitreihen der Sensorsignale aufgezeichnet, daraus Eingangsdatensätze generiert und diese einem Klassifikationsvektor zugeordnet, der jedem der in der Vermessungssituation vorgesehenen Umgebungsobjekte die betreffende Objekteigenschaft des Umgebungsobjekts, in der Regel in Form eines One-Hot-codierten Vektors, angibt. Um den Vermessungsaufwand zu reduzieren, wird nachfolgend in Verbindung mit dem Flussdiagramm der Fig. 2 ein Verfahren beschrieben, das es ermöglicht, von anderen Konfigurationen von bereits vermessenen Ultraschall-Sensorsystemen Trainingsdatensätze abzuleiten und für das Training des Klassifikationsmodells für die neue Konfiguration des Ultraschall-Sensorsystems zu nutzen.

Das Verfahren der Fig. 2 kann als Software oder Hardware in einer herkömmlichen Datenverarbeitungseinrichtung implementiert werden und insbesondere offline ausgeführt werden, d. h. außerhalb des Fahrzeugs, in dem das Klassifikationsmodell 61 eingesetzt werden soll.

In Schritt S1 wird zunächst eine Datenbank bereitgestellt, in der für mehrere Konfigurationen von Ultraschall-Sensorsystemen 2 Trainingsdatenmengen mit Trainingsdatensätzen für jeweils verschiedene Vermessungssituationen vorhanden sind. Eine Vermessungssituation ist allgemein durch Vermessungsmerkmale bestimmt, die eine relative Position eines oder mehrerer Umgebungsobjekte zum Ultraschall-Sensorsystem 2 bzw. die Entfernung von dem Ultraschallsensorsystem und die diesbezügliche Orientierung sowie eine Eigenschaft des Umgebungsobjekts U angeben, wie z. B. eine Höhe des einen oder der mehreren Umgebungsobjekte U.

Die unterschiedlichen Konfigurationen der Ultraschall-Sensorsysteme 2 werden durch charakterisierende Konfigurationsmerkmale bestimmt, die beispielsweise Anordnungsmerkmale und Sensortypmerkmale umfassen können. Die Anordnungsmerkmale können beispielsweise eine Einbauhöhe der Ultraschallwandler, einen vertikalen Einbauwinkel der Ultraschallwandler, einen Versatz der Einbauhöhen zwischen den Ultraschallwandlern, einen horizontalen Einbauwinkel der Ultraschallwandler und eine Anzahl der Ultraschallwandler umfassen. Die Berücksichtigung des Sensortyps in dem Sensortypmerkmal kann insbesondere wichtig sein, da Ultraschallwandler 5 unterschiedliche Empfindlichkeiten und Empfangseigenschaften aufweisen können.

In Schritt S2 werden die entsprechenden Konfigurationsmerkmale für die neue Konfiguration des Ultraschall-Sensorsystems 2 bestimmt.

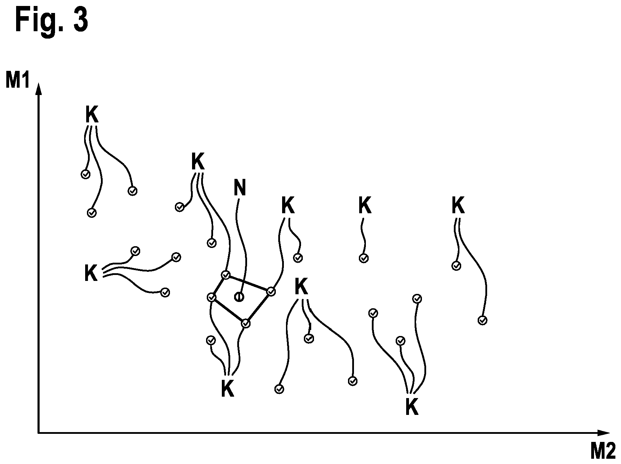

In Schritt S3 wird eine Anzahl von nächstliegenden Konfigurationen von Ultraschall-Sensorsystemen 2 ermittelt, wobei die Anzahl mindestens einer um 1 erhöhten Anzahl der Dimensionen des Konfigurationsmerkmalsraums entspricht. Es ergeben sich beispielsweise, wie schematisch in Figur 3 dargestellt, für zwei Konstruktionsmerkmale M1, M2, wie z. B. die Einbauhöhe und den vertikalen Einbauwinkel als Konstruktionsmerkmale, mehrere Konfigurationsmerkmalspunkte K von bereits vermessenen Ultraschall-Sensorsystemen 2 in der Datenbank und ein neuer Konfigurationsmerkmalspunkt N für die Konfiguration des Ultraschall-Sensorsystems 2, für das Trainingsdatensätze bereitgestellt werden sollen. Die nächstliegenden Konfigurationsmerkmalspunkte K von bereits vermessenen Ultraschall-Sensorsystemen 2 werden so bestimmt, dass diese einen Bereich im Konfigurationsmerkmalsraum definieren, innerhalb dem der neue Konfigurationsmerkmalspunkt N liegt.

In Schritt S4 werden nun Trainingsdatensätze für eine bestimmte Vermessungssituation bzw. dazu ähnliche Vermessungssituationen, die den ausgewählten Konfigurationen von Ultraschall-Sensorsystemen 2 zugeordnet sind, ausgewählt, um daraus Trainingsdatensätze und Validierungsdatensätze (beispielsweise 80 % Trainingsdatensätze und 20 % Validierungsdatensätze) für ein nachfolgendes Modelltraining des Klassifikationsmodells insbesondere per Zufallsauswahl auszuwählen. Dies wird für verschiedene Vermessungssituationen, insbesondere für alle verfügbaren Vermessungssituationen, durchgeführt. Zu der bestimmten Vermessungssituation ähnliche Vermessungssituationen können anhand eines Winkelabstands eines durch die betreffenden Vermessungsmerkmalspunkte bestimmten Merkmalsvektors oder des euklidischen Abstands der betreffenden Vermessungsmerkmalspunkte, die jeweils durch ein oder mehrere Vermessungsmerkmale bestimmt sind, ermittelt werden, beispielsweise alle Vermessungsmerkmalspunkte, die von dem Vermessungsmerkmalspunkt der bestimmten Vermessungssituation nicht mehr als ein vorgegebener Maximalwinkel bzw. Maximalabstand beabstandet sind.

Anschließend erfolgt in Schritt S5 mit den so ermittelten Trainingsdatensätzen ein Modelltraining.

Mithilfe der Validierungsdatensätze kann in Schritt S6 nun für jede Vermessungssituation separat bestimmt werden, ob das trainierte Klassifikationsmodell eine ausreichende Genauigkeit aufweist. Die Genauigkeit kann insbesondere durch das Verhältnis der korrekten/richtigen Klassifikationen der jeweiligen Umgebungsobjekte bezogen auf die Gesamtanzahl der Überprüfungen (Anzahl der für diese Vermessungssituation betrachteten Validierungsdatensätze) ermittelt werden.

Wird in Schritt S7 festgestellt, dass der Anteil der korrekten Klassifikationen unter einer vorgegebenen Genauigkeitsschwelle liegt (Alternative: Ja), so ist das trainierte Klassifikationsmodell nicht zuverlässig für die bestimmte Vermessungssituation, und es müssen in Schritt S8 weitere Trainingsdatensätze mithilfe herkömmlicher Methoden, insbesondere durch Vermessung am realen System, für diese oder eine dazu ähnliche Vermessungssituation ermittelt werden. Mit diesen kann dann das Klassifikationsmodell in Schritt S9 nachtrainiert werden. Wird in Schritt S7 festgestellt, dass der Anteil der korrekten Klassifikationen über der vorgegebenen Genauigkeitsschwelle liegt (Alternative: Nein), so ist das trainierte Klassifikationsmodell zuverlässig für die bestimmte Vermessungssituation, und die Schritte S8 und S9 werden nicht ausgeführt. Die Schritte S7 bis S9 werden für jede Vermessungssituation durchgeführt.

Die Abhängigkeit zu den Konfigurationsmerkmalen ist nicht bei allen Umgebungsobjekten gleich stark ausgeprägt, so dass bei einigen Vermessungssituationen variierende Konfigurationsmerkmale keinen großen Einfluss auf das Klassifikationsergebnis haben, während bei anderen Vermessungssituationen schon bei geringen Positionsänderungen der Umgebungsobjekte signifikante Fehlklassifikationen auftreten können. Somit kann die Auswahl der nächstliegenden Konfigurationen von Ultraschallsensorsystemen neben den Konstruktionsmerkmalen auch ein oder mehrere Objekteigenschaften des Umgebungsobjekts für jede individuelle Vermessungssituation berücksichtigen und für jede betrachtete Vermessungssituation separat durchgeführt werden.

Auch kann die Anzahl der ausgewählten nächstliegenden Konfigurationen von Ultraschall-Sensorsystemen abhängig von der Empfindlichkeit des Klassifikationsergebnis von der Vermessungssituation bestimmt werden.

Weiterhin können die Konfigurationsmerkmale auch den Beladungszustand des Fahrzeugs berücksichtigen, wobei zwei oder mehrere Beladungszustände entsprechend berücksichtigt werden können. Der Beladungszustand hat Einfluss auf die effektive Einbauhöhe und den effektiven vertikalen Einbauwinkel der Ultraschallwandler, so dass der Beladungszustand bei der Auswahl der entsprechenden nächstliegenden Konfigurationen von Ultraschall-Sensorsystemen berücksichtigt werden kann.

## Patentansprüche

1. Computerimplementiertes Verfahren zum Trainieren eines datenbasierten Klassifikationsmodells (61) für eine Konfiguration eines neuen Ultraschall-Sensorsystems (2) mit mehreren Ultraschallwandlern (5) mit Trainingsdatensätzen, wobei das Klassifikationsmodell (61) für ein oder mehrere Umgebungsobjekte (U) mindestens eine Klasse für eine Objekteigenschaft angibt, wobei ein Trainingsdatensatz einen Eingangsdatensatz aus Sensordaten der Ultraschallwandler (5) und/oder aus daraus abgeleiteten Sensordatenmerkmalen einem Klassifikationsvektor für ein oder mehrere Umgebungsobjekte (U) zuordnet, mit folgenden Schritten:
- Bereitstellen (S1) von Trainingsdatenmengen für mehrere Konfigurationen von Ultraschall-Sensorsystemen (2), wobei die Trainingsdatenmengen jeweils einen oder mehrere Trainingsdatensätze für jeweils eine entsprechende Vermessungssituation umfassen,
- Auswählen (S3) von Konfigurationen von Ultraschall-Sensorsystemen (2), die zumindest bezüglich Konfigurationsmerkmalen nächstliegend zu der Konfiguration des neuen Ultraschall-Sensorsystems (2) sind,
- Auswählen (S4) von Trainingsdatensätzen und Validierungsdatensätzen aus den den ausgewählten Konfigurationen von Ultraschall-Sensorsystemen (2) zugeordneten Trainingsdatenmengen;
- Trainieren (S5) des Klassifikationsmodells (61) für die Konfiguration des neuen Ultraschall-Sensorsystems (2) basierend auf den ausgewählten Trainingsdatensätzen und Validierungsdatensätzen.

2. Verfahren nach Anspruch 1, wobei das Klassifikationsmodell (61) mit weiteren Trainingsdatensätzen für die Konfiguration des neuen Ultraschall-Sensorsystems (2) nachtrainiert wird (S8).

3. Verfahren nach Anspruch 2, wobei ein weiterer Trainingsdatensatz für eine bestimmte Vermessungssituation durch eine Vermessung bestimmt wird, wenn eine Modellgenauigkeit, die mithilfe der Validierungsdatensätze, die der bestimmten Vermessungssituation oder Vermessungssituationen, die zu der bestimmten Vermessungssituation ähnlich sind, zugeordnet sind, bestimmt werden, unter einem vorgegebenen Schwellenwert liegt.

4. Verfahren nach Anspruch 3, wobei Vermessungssituationen durch Vermessungsmerkmale bestimmt sind, wobei ähnliche Vermessungssituationen dadurch bestimmt sind, dass Vermessungsmerkmalspunkte, die jeweils durch ein oder mehrere Vermessungsmerkmale einer Vermessungssituation bestimmt sind, von dem Vermessungsmerkmalspunkt der bestimmten Vermessungssituation einen Abstand von nicht mehr als einen vorgegebenen Maximalabstand aufweisen, wobei insbesondere ein Vermessungsmerkmal einer relativen Position und eine oder mehrere Objekteigenschaften der die Vermessungssituation charakterisierenden Umgebungsobjekte bestimmt sind.

5. Verfahren nach einem der Ansprüche 1 bis 4, wobei Konfigurationsmerkmale durch ein oder mehrere Anordnungsmerkmale und ein oder mehrere Sensortypmerkmale bestimmt sind, wobei die Konfigurationen von Ultraschall-Sensorsystemen ausgewählt werden, indem eine Anzahl von nächstbenachbarten Konfigurationsmerkmalspunkten ausgewählt wird, die einen Bereich aufspannen, der einen Konfigurationsmerkmalspunkt der Konfiguration des neuen Ultraschall-Sensorsystems (2) beinhaltet.

6. Verfahren nach Anspruch 5, wobei die Konfigurationen von Ultraschall-Sensorsystemen (2) für verschiedene Vermessungssituationen ausgewählt werden, indem eine Anzahl von nächstbenachbarten Konfigurationsmerkmalspunkten (K) , die neben dem einen oder den mehreren Anordnungsmerkmalen und dem einen oder den mehreren Sensortypmerkmalen auch durch ein oder mehrere Vermessungsmerkmale, insbesondere eine relative Position eines oder mehrerer Umgebungsobjekte (U) zu dem neuen Ultraschall-Sensorsystem (2), und/oder eine Objekteigenschaft, insbesondere eine Höhe, bestimmt sind, ausgewählt wird, so dass diese einen Bereich aufspannen, der den Konfigurationsmerkmalspunkt (N) der Konfiguration des neuen Ultraschall-Sensorsystems (2) einschließlich des einen oder der mehreren Vermessungsmerkmale beinhaltet.

7. Verfahren nach einem der Ansprüche 1 bis 6, wobei das Klassifikationsmodell als datenbasierter Entscheidungsbaum ausgebildet ist.

8. Vorrichtung zur Durchführung eines der Verfahren nach einem der Ansprüche 1 bis 7

9. Computerprogrammprodukt, umfassend Befehle, die bei einer Ausführung durch mindestens eine Datenverarbeitungseinrichtung diese veranlassen, die Schritte des Verfahrens nach einem der Ansprüche 1 bis 7 auszuführen.

10. Maschinenlesbares Speichermedium, umfassend Befehle, die bei einer Ausführung durch mindestens eine Datenverarbeitungseinrichtung diese veranlassen, die Schritte des Verfahrens nach einem der Ansprüche 1 bis 7 auszuführen.

## Claims

1. A computer-implemented method for training a data-based classification model (61) for a configuration of a new ultrasonic sensor system (2) having a plurality of ultrasonic transducers (5) using training data sets, wherein the classification model (61) specifies at least one class for an object property for one or more environmental objects (U), wherein a training data set assigns an input data set of sensor data of the ultrasonic transducers (5) and/or of sensor data features derived therefrom to a classification vector for one or more environmental objects (U), having the following steps:
- providing (S1) training data quantities for a plurality of configurations of ultrasonic sensor systems (2), wherein the training data quantities each comprise one or more training data sets for a respective corresponding measurement situation,
- selecting (S3) configurations of ultrasonic sensor systems (2) which are nearest to the configuration of the new ultrasonic sensor system (2), at least with regard to configuration features,
- selecting (S4) training data sets and validation data sets from the training data quantities assigned to the selected configurations of ultrasonic sensor systems (2);
- training (S5) the classification model (61) for the configuration of the new ultrasonic sensor system (2) on the basis of the selected training data sets and validation data sets.

2. The method as claimed in claim 1, wherein the classification model (61) is retrained (S8) with further training data sets for the configuration of the new ultrasonic sensor system (2).

3. The method as claimed in claim 2, wherein a further training data set for a specific measurement situation is determined by a measurement if the model accuracy, determined with the aid of the validation data sets assigned to the specific measurement situation or to measurement situations which are similar to the specific measurement situation, is below a predefined threshold value.

4. The method as claimed in claim 3, wherein measurement situations are determined by measurement features, wherein similar measurement situations are determined in that measurement feature points, which are each determined by one or more measurement features of a measurement situation, have a distance of not more than a predefined maximum distance from the measurement feature point of the specific measurement situation, wherein, in particular, a measurement feature of a relative position and one or more object properties of the environmental objects characterizing the measurement situation are determined.

5. The method as claimed in one of claims 1 to 4, wherein configuration features are determined by one or more arrangement features and one or more sensor type features, wherein the configurations of ultrasonic sensor systems are selected by selecting a number of nearest-neighbor configuration feature points spanning a range which includes a configuration feature point of the configuration of the new ultrasonic sensor system (2).

6. The method as claimed in claim 5, wherein the configurations of ultrasonic sensor systems (2) are selected for different measurement situations in that a number of nearest-neighbor configuration feature points (K), which, in addition to the one or more arrangement features and the one or more sensor type features, are also determined by one or more measurement features, in particular a position of one or more environmental objects (U) relative to the new ultrasonic sensor system (2), and/or an object property, in particular a height, are selected so that they span a range which includes the configuration feature point (N) of the configuration of the new ultrasonic sensor system (2), including the one or more measurement features.

7. The method as claimed in one of claims 1 to 6, wherein the classification model is designed as data-based decision tree.

8. An apparatus for carrying out one of the methods as claimed in one of claims 1 to 7.

9. A computer program product, comprising instructions which, when executed by at least one data processing device, prompt said data processing device to execute the steps of the method as claimed in one of claims 1 to 7.

10. A machine-readable storage medium, comprising instructions which, when executed by at least one data processing device, cause said data processing device to execute the steps of the method as claimed in one of claims 1 to 7.

## Revendications

1. Procédé mis en œuvre par ordinateur pour entraîner un modèle de classification basé sur des données (61) pour une configuration d'un nouveau système de capteurs à ultrasons (2) comportant plusieurs transducteurs à ultrasons (5) à l'aide de jeux de données d'entraînement, dans lequel le modèle de classification (61) indique, pour un ou plusieurs objets environnants (U), au moins une classe pour une propriété d'objet, dans lequel un jeu de données d'entraînement associe un jeu de données d'entrée constitué de données de capteurs des transducteurs à ultrasons (5) et/ou de caractéristiques de données de capteurs dérivées de celles-ci à un vecteur de classification pour un ou plusieurs objets environnants (U), comprenant les étapes suivantes :
- la fourniture (S1) d'ensembles de données d'entraînement pour plusieurs configurations de systèmes de capteurs à ultrasons (2), dans lequel les ensembles de données d'entraînement comprennent chacun un ou plusieurs jeux de données d'entraînement pour une situation de mesure correspondante respective,
- la sélection (S3) de configurations de systèmes de capteurs à ultrasons (2) qui sont les plus proches de la configuration du nouveau système de capteurs à ultrasons (2), au moins en ce qui concerne des caractéristiques de configuration,
- la sélection (S4) de jeux de données d'entraînement et de jeux de données de validation à partir des ensembles de données d'entraînement associés aux configurations sélectionnées de systèmes de capteurs à ultrasons (2) ;
- l'entraînement (S5) du modèle de classification (61) pour la configuration du nouveau système de capteurs à ultrasons (2) sur la base des jeux de données d'entraînement et des jeux de données de validation sélectionnés.

2. Procédé selon la revendication 1, dans lequel le modèle de classification (61) est réentraîné (S8) à l'aide de jeux de données d'entraînement supplémentaires pour la configuration du nouveau système de capteurs à ultrasons (2).

3. Procédé selon la revendication 2, dans lequel un jeu de données d'entraînement supplémentaire pour une situation de mesure déterminée est déterminé par une mesure lorsqu'une précision du modèle, déterminée à l'aide des jeux de données de validation qui sont associés à la situation de mesure déterminée ou à des situations de mesure similaires à la situation de mesure déterminée, est inférieure à un seuil prédéfini.

4. Procédé selon la revendication 3, dans lequel les situations de mesure sont déterminées par des caractéristiques de mesure, dans lequel des situations de mesure similaires sont déterminées par le fait que des points de caractéristiques de mesure, qui sont chacun déterminés par une ou plusieurs caractéristiques de mesure d'une situation de mesure, présentent, par rapport au point de caractéristiques de mesure de la situation de mesure déterminée, une distance ne dépassant pas une distance maximale prédéfinie, dans lequel, en particulier, une caractéristique de mesure d'une position relative et une ou plusieurs propriétés d'objet des objets environnants caractérisant la situation de mesure sont déterminées.

5. Procédé selon l'une des revendications 1 à 4, dans lequel les caractéristiques de configuration sont déterminées par une ou plusieurs caractéristiques d'agencement et une ou plusieurs caractéristiques de type de capteur, dans lequel les configurations de systèmes de capteurs à ultrasons sont sélectionnées en sélectionnant un nombre de points de caractéristiques de configuration les plus proches voisins qui délimitent une région contenant un point de caractéristiques de configuration de la configuration du nouveau système de capteurs à ultrasons (2).

6. Procédé selon la revendication 5, dans lequel les configurations de systèmes de capteurs à ultrasons (2) sont sélectionnées pour différentes situations de mesure en sélectionnant un nombre de points de caractéristiques de configuration (K) les plus proches voisins, qui sont déterminés, outre par la ou les caractéristiques d'agencement et la ou les caractéristiques de type de capteur, également par une ou plusieurs caractéristiques de mesure, en particulier une position relative d'un ou plusieurs objets environnants (U) par rapport au nouveau système de capteurs à ultrasons (2), et/ou une propriété d'objet, en particulier une hauteur, de sorte que ces points délimitent une région contenant le point de caractéristiques de configuration (N) de la configuration du nouveau système de capteurs à ultrasons (2), y compris la ou les caractéristiques de mesure.

7. Procédé selon l'une des revendications 1 à 6, dans lequel le modèle de classification se présente sous la forme d'un arbre de décision basé sur des données.

8. Dispositif pour la mise en œuvre du procédé selon l'une des revendications 1 à 7.

9. Produit programme d'ordinateur, comprenant des instructions qui, lorsqu'elles sont exécutées par au moins un dispositif de traitement de données, amènent celui-ci à exécuter les étapes du procédé selon l'une des revendications 1 à 7.

10. Support de stockage lisible par machine, comprenant des instructions qui, lorsqu'elles sont exécutées par au moins un dispositif de traitement de données, amènent celui-ci à exécuter les étapes du procédé selon l'une des revendications 1 à 7.
